# EUROPEAN PATENT APPLICATION

(11) **EP 4 615 103 A1**
(43) Date of publication of application: **10.09.2025**
(21) Application number: 22964513.0
(22) Date of filing: 04.11.2022
(51) Int. Cl.: H04W 72/0453

(54) **TERMINAL, WIRELESS BASE STATION, AND WIRELESS COMMUNICATION METHOD**

(71) Applicant: NTT DOCOMO, INC., Tokyo 100-6150 (JP)
(72) Inventor: KUMAGAI Shinya, Tokyo 100-6150 (JP); HARADA Hiroki, Tokyo 100-6150 (JP); NAGATA Satoshi, Tokyo 100-6150 (JP)
(74) Representative: Hoffmann Eitle
(86) International application number: PCT/JP2022/041266
(87) International publication number: WO 2024/095497

(57) **Abstract**

A terminal includes a reception unit that receives a physical broadcast channel to which one or more resource blocks are allocated, and a control unit that assumes, when a second channel bandwidth narrower than a first channel bandwidth is applied, the physical broadcast channel, to which a remaining resource block is allocated which is obtained by excluding a part of the resource blocks corresponding to the first channel bandwidth.

## Description

### Technical Field

The present disclosure relates to a terminal, a radio base station, and a radio communication method, performing transmission and reception of signals at a frequency of 5 MHz or less.

### Background Art

The 3rd Generation Partnership Project (3GPP, registered trademark) has prepared a specification for the 5th generation mobile communication system (also called 5G, New Radio (NR), or Next Generation (NG)) and is also preparing next generation specifications called Beyond 5G, 5G Evolution, or 6G.

NR specifies a channel bandwidth (Channel Bandwidth, CBW) from 5 MHz to 400 MHz. In 3GPP, it is discussed to use for NR a bandwidth of less than 5 MHz (2nd channel bandwidth) which is narrower than the channel bandwidth of 5 MHz to 400 MHz (1st channel bandwidth) (for example, see Non-Patent Literature 1). By using a bandwidth of less than 5 MHz for NR, it becomes possible to support use cases such as smart grids and railway mobile communication systems that require low latency.

### Citation List

### Non-Patent Literature

Non-Patent Literature 1: "NR support for dedicated spectrum less than 5 MHz for FR1", RP-222645, 3GPP TSG RAN Meeting #97e Electronic Meeting, September 12-16, 2022

### Summary of the Invention

However, since a bandwidth of 5 MHz or less is not supported by NR in the prior art, when a CBW is 5 MHz or less, due to the occupied bandwidth, there is an issue that a channel or signal may be generated that cannot be transmitted or received between radio base stations and UEs in conventional formats.

Therefore, the following disclosure has been made in view of this situation, and an object of the present disclosure is to provide a terminal, a radio base station, and a radio communication method, capable of properly transmitting and receiving a channel or a signal between a radio base station and a UE even when a bandwidth of 5 MHz or less is applied.

One aspect of the disclosure is a terminal (UE 200) including: a reception unit (control signal and reference signal processing unit 240) that receives a physical broadcast channel (PBCH) to which one or more resource blocks are allocated; and a control unit (control unit 270) that assumes, when a second channel bandwidth narrower than a first channel bandwidth (CBW) is applied, the physical broadcast channel, to which a remaining resource block is allocated which is obtained by excluding a part of the resource blocks corresponding to the first channel bandwidth.

One aspect of the disclosure is a terminal (UE 200) including: a reception unit (control signal and reference signal processing unit 240) that receives a physical broadcast channel (PBCH) to which one or more resource blocks are allocated; and a control unit (control unit 270) that assumes, when a second channel bandwidth narrower than a first channel bandwidth (CBW) is applied, the physical broadcast channel, where a part of the resource blocks corresponding to the first channel bandwidth is allocated at a position different from a position of a remaining resource block in a time direction.

One aspect of the disclosure is a terminal (UE 200) including: a reception unit (control signal and reference signal processing unit 240) that receives a synchronization signal block; and a control unit (control unit 270) that assumes, when a second channel bandwidth narrower than a first channel bandwidth (CBW) is applied, the synchronization signal block, which is arranged based on a second sync raster whose spacing in a frequency direction is narrower than that of a first sync raster for configuring an arrangement position in the frequency direction of a synchronization signal block received using the first channel bandwidth.

One aspect of the disclosure is a radio base station (gNB 100) including: a transmission unit that transmits a physical broadcast channel (PBCH) to which one or more resource blocks are allocated; and a control unit that assumes, when a second channel bandwidth narrower than a first channel bandwidth (CBW) is applied, the physical broadcast channel, to which a remaining resource block is allocated which is obtained by excluding a part of the resource blocks corresponding to the first channel bandwidth.

One aspect of the disclosure is a radio communication method including: a step of receiving by a terminal (UE 200) a physical broadcast channel (PBCH) to which one or more resource blocks are allocated; and a step of assuming by the terminal (UE 200), when a second channel bandwidth narrower than a first channel bandwidth (CBW) is applied, the physical broadcast channel, to which a remaining resource block is allocated which is obtained by excluding a part of the resource blocks corresponding to the first channel bandwidth.

### Brief Description of Drawings

[FIG. 1] FIG. 1 is an overall schematic configuration diagram of a radio communication system 10.
[FIG. 2] FIG. 2 is a diagram illustrating frequency ranges used in the radio communication system 10.
[FIG. 3] FIG. 3 is a diagram illustrating a configuration example of a radio frame, subframes, and slots used in the radio communication system 10.
[FIG. 4] FIG. 4 is a functional block configuration diagram of a UE 200.
[FIG. 5] FIG. 5 is a functional block configuration diagram of a gNB 100.
[FIG. 6] FIG. 6 is a diagram for explaining a first issue.
[FIG. 7] FIG. 7 is a diagram for explaining operation example 1-1.
[FIG. 8] FIG. 8 is a diagram for explaining operation example 1-2f
[FIG. 9] FIG. 9 is a diagram for explaining operation example 1-3.
[FIG. 10] FIG. 10 is a diagram for explaining another first issue.
[FIG. 11] FIG. 11 is a diagram for explaining operation example 1'-0.
[FIG. 12] FIG. 12 is a diagram for explaining operation example 1'-1.
[FIG. 13] FIG. 13 is a diagram for explaining operation example 1'-2.
[FIG. 14] FIG. 14 is a diagram for explaining a second issue.
[FIG. 15] FIG. 15 is a diagram for explaining operation example 2-1.
[FIG. 16] FIG. 16 is a diagram for explaining operation example 2-1.
[FIG. 17] FIG. 17 is a diagram for explaining operation example 2-1a.
[FIG. 18] FIG. 18 is a diagram for explaining operation example 2-2.
[FIG. 19] FIG. 19 is a diagram for explaining another second issue.
[FIG. 20] FIG. 20 is a diagram for explaining operation example 2'.
[FIG. 21] FIG. 21 is a diagram for explaining operation example 3.
[FIG. 22] FIG. 22 is a diagram illustrating a hardware configuration example of the gNB 100 and the UE 200.
[FIG. 23] FIG. 23 is a diagram illustrating a configuration example of a vehicle 2001.

### Description of Embodiments

Embodiments will be described below with reference to the drawings. Note that the same or similar reference numerals have been attached to the same functions and configurations, and the description thereof is omitted as appropriate.

### (1) Overall schematic configuration of radio communication system

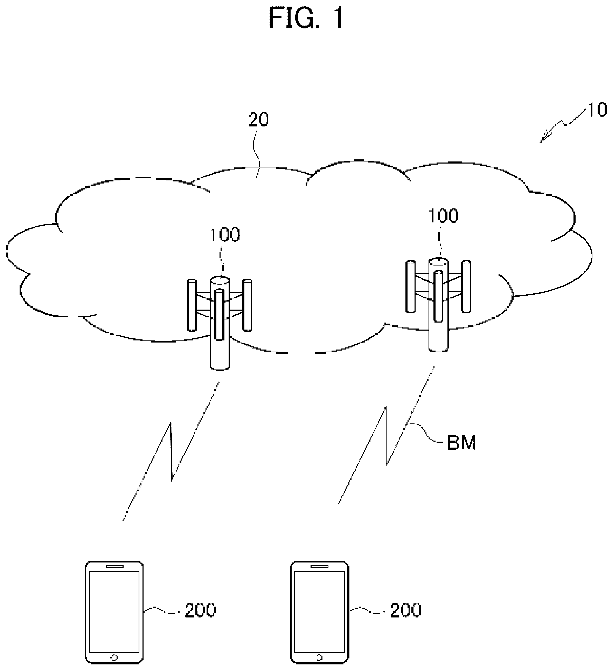

FIG. 1 is an overall schematic configuration diagram of a radio communication system 10 according to an embodiment. The radio communication system 10 is a 5G New Radio (NR) compliant radio communication system and includes a next generation radio access network 20 (hereinafter, NG-RAN 20) and a terminal 200 (hereinafter, UE 200, User Equipment, UE). Note that the radio communication system 10 may be compliant with a system called Beyond 5G, 5G Evolution, or 6G. The radio communication system 10 may include a gNB 100, the UE 200, an NG-RAN 20, and a core network.

The NG-RAN 20 includes the radio base station 100 (hereinafter, gNB 100). The NG-RAN 20 actually includes multiple NG-RAN Nodes, specifically gNBs (or ng-eNBs), and is connected to a 5G-compliant core network (for example, 5GC). Note that the NG-RAN 20 and the core network may be expressed simply as a "network". The specific configuration of the radio communication system 10 including the gNB 100 and the UE 200 is not limited to the example illustrated in FIG. 1.

The gNB 100 is a 5G-compliant radio base station and performs radio communication with the UE 200 according to 5G. The gNB 100 and the UE 200 can support Massive MIMO (multiple-input multiple-output) generating a beam BM with higher directivity by controlling radio signals transmitted from multiple antenna elements, a carrier aggregation (CA) bundling and using multiple component carriers (CCs), and dual connectivity (DC) performing simultaneous communication with two or more transport blocks between the UE and each of the two NG-RAN Nodes.

In the present embodiment, the radio communication system 10 may support conditional reconfiguration. Conditional reconfiguration may include Conditional Handover (CHO), Conditional PSCell (Primary Secondary Cell) Change (CPC), and Conditional PSCell Addition (CPA). Configuration information may be called ConditionalReconfiguration. ConditionalReconfiguration may include Special Cell (SpCell below) configuration. SpCell may include PCell and may include PSCell. That is, SpCell configuration is configuration information related to candidate target cells in conditional reconfiguration (CHO, CPC or CPA). Conditional Reconfiguration may be included in RRC Reconfiguration.

The core network includes a network device. The network device may include LMF (Location Management Function), AMF (Access and Mobility management Function, or the like. The network device may be an E-SMLC (Evolved Serving Mobile Location Centre). The gNB 100 makes up a radio communication node.

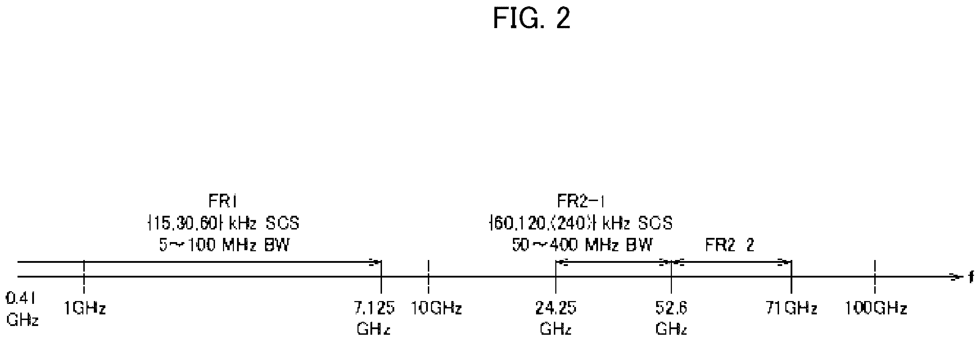

The radio communication system 10 also supports multiple frequency ranges (FRs). FIG. 2 illustrates frequency ranges used in the radio communication system 10. As illustrated in FIG. 2, the radio communication system 10 may support multiple frequency ranges (FRs). Specifically, the following frequency ranges may be supported.
- FR1: 410 MHz to 7.125 GHz
- FR2-1: 24.25 GHz to 52.6 GHz
- FR2-2: more than 52.6 GHz to 71 GHz

In FR1, a Sub-Carrier Spacing (SCS) of 15, 30, or 60 kHz and a bandwidth (BW) of 5 to 100 MHz may be used. In FR2-1, an SCS of 60 or 120 kHz (240 kHz may be included) and a BW of 50 to 400 MHz may be used.

In FR2-2, Cyclic Prefix-Orthogonal Frequency Division Multiplexing (CP-OFDM) or Discrete Fourier Transform-Spread-Orthogonal Frequency Division Multiplexing (DFT-S-OFDM), having a larger SCS, may be applied to avoid an increase in phase noise.

Note that the SCS may be interpreted as numerology. Numerology is defined in 3GPP TS38.300 and corresponds to one Sub-Carrier Spacing in a frequency domain.

When a band above 52.6 GHz is used, cyclic prefix-orthogonal frequency division multiplexing (CP-OFDM) / discrete Fourier transform-spread (DFT-S-OFDM) having a larger Sub-Carrier Spacing (SCS) may be applied in response to the issue where the influence of phase noise increases in the high frequency band. When a band above 52.6 GHz is used, Cyclic Prefix-Orthogonal Frequency Division Multiplexing (CP-OFDM) / Discrete Fourier Transform-Spread (DFT-S-OFDM) having a larger Sub-Carrier Spacing (SCS) may be applied.

In a high frequency band, such as FR2x, an increase in phase noise between carriers becomes an issue as described above. Thus, it may be necessary to apply a larger (wider) SCS or a single-carrier waveform. The larger the SCS, the shorter the symbol/CP (Cyclic Prefix) period and the slot period (when a configuration of 14 symbols / slot is maintained).

When the configuration of 14 symbols / slot is maintained, the larger (wider) the SCS, the shorter the symbol period (and slot period). Note that the symbol period may be called a symbol length, a time direction, or a time domain. The frequency direction may be called a frequency domain, a resource block, a subcarrier, or a BWP (bandwidth part).

The frequency resource may include a component carrier, a subcarrier, a resource block (RB), a resource block group (RBG), a BWP (bandwidth part), or the like. The time resource may include a symbol, a slot, a minislot, a subframe, a radio frame, a DRX (Discontinuous Reception) period, and the like.

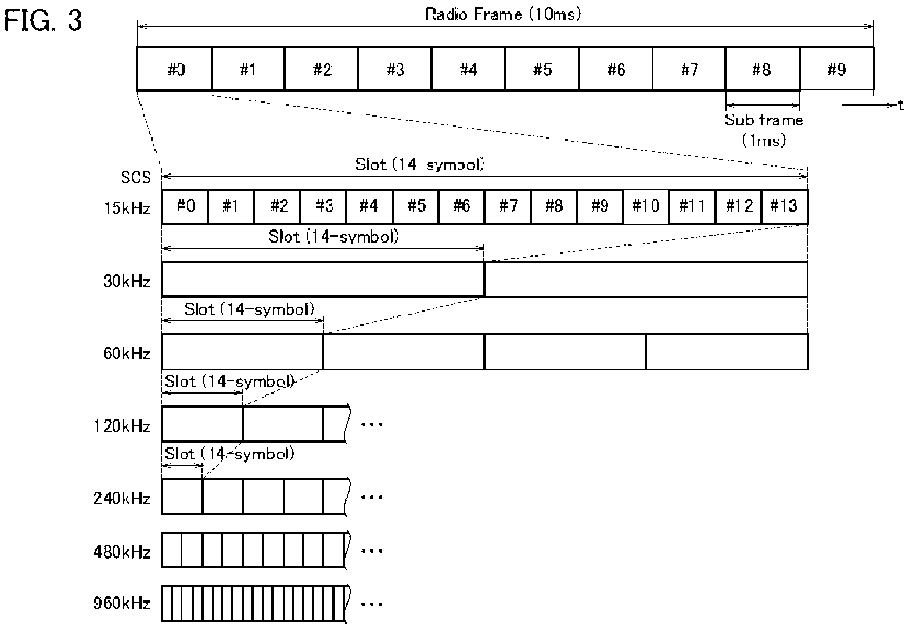

FIG. 3 illustrates a configuration example of a radio frame, subframes, and slots used in the radio communication system 10.

As illustrated in FIG. 3, a slot consists of 14 symbols, and the symbol length (and the slot length) gets shorter as the SCS gets larger (wider). The SCS is not limited to the spacing (frequencies) in FIG. 3. For example, 480 kHz, 960 kHz, or the like may be used.

The number of symbols constituting one slot does not necessarily have to be 14 (it may be 28 or 56 symbols). Further, the number of slots per subframe may differ depending on the SCS.

Note that a time direction (t) in FIG. 3 may be called a time domain, a symbol length, a symbol time, or the like. A frequency direction may be called a frequency domain, a resource block, a subcarrier, a bandwidth part (BWP: Bandwidth Part), or the like.

A DMRS is a type of reference signal and is prepared for various channels. Here, unless otherwise noted, a DMRS for a downlink data channel, specifically for a PDSCH (physical downlink shared channel) and for a PDCCH (physical downlink control channel), may be signified. However, a DMRS for an uplink data channel, specifically for a PUSCH (physical uplink shared channel), may be interpreted in the same manner as a DMRS for a PDSCH.

The DMRS can be used for channel estimation in the UE 200 as a device, for example, part of coherent demodulation. The DMRS may be present only in a resource block (RB) used for a PDSCH transmission.

The DMRS may have multiple mapping types. Specifically, the DMRS has mapping type A and mapping type B. In mapping type A, the first DMRS is arranged on the second or third symbol of a slot. In mapping type A, the DMRS may be mapped based on slot boundaries regardless of where in the slot the actual data transmission begins. The reason why the first DMRS is arranged on the second or third symbol of the slot may be interpreted as to arrange the first DMRS after control resource sets (CORESET).

In mapping type B, the first DMRS may be arranged on the first symbol in data allocation. That is, the position of the DMRS may be provided relatively to where data is arranged, not to slot boundaries.

The DMRS may have multiple types. Specifically, the DMRS may have Type 1 and Type 2. Type 1 and Type 2 differ in mapping in the frequency domain and the maximum number of orthogonal reference signals. Type 1 can output up to four orthogonal signals with a single-symbol DMRS, while Type 2 can output up to eight orthogonal signals with a double-symbol DMRS.

In the present embodiment, a synchronization signal block (SSB) may be transmitted from the gNB 100 to the UE 200. The SSB can be interpreted as a synchronization signal block received using the first channel bandwidth (CBW). The first channel bandwidth may be interpreted as a channel bandwidth of 5 MHz to 400 MHz. In this case, the SSB may be interpreted as a synchronization signal block arranged based on a first sync raster defined in section 5.4.3.1 of 3GPP TS38.101-1. The sync raster may be interpreted as a grid that transmits SSBs at a specific period. The sync raster configures an arrangement position in a frequency direction of a synchronization signal block (SSB) to be received by the UE 200 using the CBW. When a second channel bandwidth narrower than the first channel bandwidth is applied, the SSB may be interpreted as a synchronization signal block received using the second channel bandwidth.

In the present embodiment, a physical broadcast channel (PBCH) may be transmitted from the gNB 100 to the UE 200. The PBCH is used to broadcast an information block containing system information required by the UE 200. The PBCH may be interpreted as a physical broadcast channel received using the first channel bandwidth (CBW). The first channel bandwidth may be interpreted as a channel bandwidth from 5 MHz to 400 MHz. When a second channel bandwidth narrower than the first channel bandwidth is applied, the PBCH may be interpreted as a physical broadcast channel received using the second channel bandwidth.

In the present embodiment, a tracking reference signal (TRS) may be transmitted from the gNB 100 to the UE 200.

### (2) Function block configuration of radio communication system

Next, a functional block configuration of the radio communication system 10 will be described.

First, a function block configuration of the UE 200 will be described.

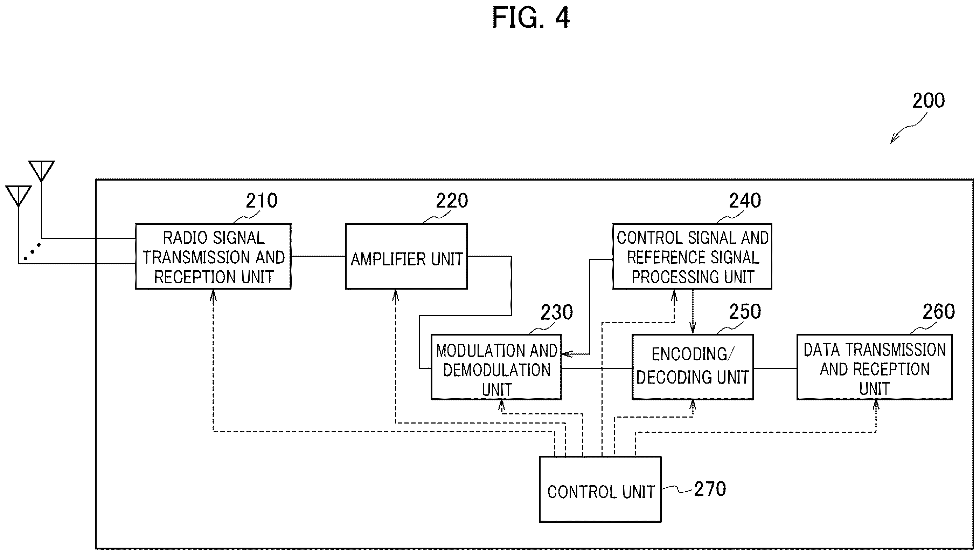

FIG. 4 is a functional block configuration diagram of the UE 200. As illustrated in FIG. 4, the UE 200 includes a radio signal transmission and reception unit 210, an amplifier unit 220, a modulation and demodulation unit 230, a control signal and reference signal processing unit 240, an encoding/decoding unit 250, a data transmission and reception unit 260, and a control unit 270.

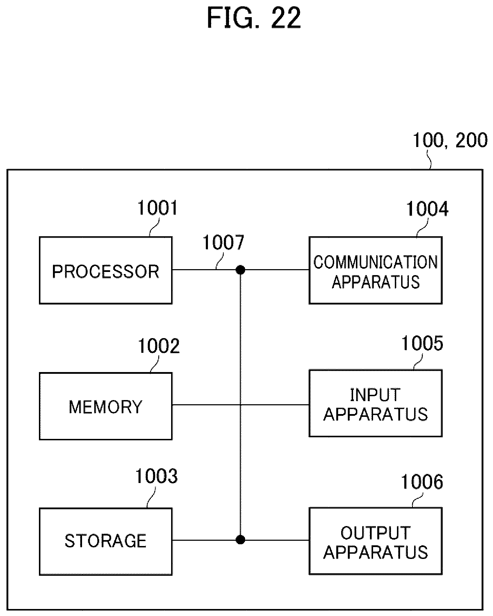

Note that only the main functional blocks related to the description of the embodiment are illustrated in FIG. 4, and the UE 200 has other functional blocks (for example, a power supply unit, etc.). FIG. 4 illustrates a functional block configuration of the UE 200. For the hardware configuration, refer to FIG. 22.

The radio signal transmission and reception unit 210 transmits and receives radio signals in accordance with NR. The radio signal transmission and reception unit 210 can support massive MIMO that generates a beam with higher directivity by controlling radio (RF) signals transmitted from multiple antenna elements, carrier aggregation (CA) bundling and using multiple CCs, and Dual Connectivity (DC) performing simultaneous communication between the UE and each of the two NG-RAN Nodes.

The amplifier unit 220 includes a PA (power amplifier) / an LNA (low noise amplifier), or the like. The amplifier unit 220 amplifies the signal output from the modulation and demodulation unit 230 to a predetermined power level. The amplifier unit 220 also amplifies the RF signal output from the radio signal transmission and reception unit 210.

The modulation and demodulation unit 230 performs data modulation/demodulation, transmission power setting, resource block allocation, and the like for each predetermined communication destination (gNB 100 or another gNB). In the modulation and demodulation unit 230, cyclic prefix-orthogonal frequency division multiplexing (CP-OFDM) or discrete Fourier transform-spread (DFT-S-OFDM) may be applied. DFT-S-OFDM may also be used for a downlink (DL) as well as an uplink (UL).

The control signal and reference signal processing unit 240 performs processing regarding various control signals transmitted and received by the UE 200 and processing regarding various reference signals transmitted and received by the UE 200.

Specifically, the control signal and reference signal processing unit 240 receives various control signals transmitted from the gNB 100 via a predetermined control channel, for example, a control signal of a radio resource control (RRC) layer. The control signal and reference signal processing unit 240 also transmits various control signals to the gNB 100 through a predetermined control channel.

The control signal and reference signal processing unit 240 performs processing using a reference signal (RS) such as a Demodulation Reference Signal (DMRS) and a Phase Tracking Reference Signal (PTRS). A DMRS is a reference signal (pilot signal) specific to the UE 200, known between a base station and the UE 200 for estimating a fading channel used for data demodulation. A PTRS is a reference signal specific to the UE 200 for the purpose of estimating phase noise, which becomes an issue in a high frequency band.

Note that the reference signal may include a Tracking Reference Signal (TRS), a Channel State Information-Reference Signal (CSI-RS), a Sounding Reference Signal (SRS), and a Positioning Reference Signal (PRS) for position information, in addition to the DMRS and PTRS.

The channel includes a control channel and a data channel. The control channel includes a PDCCH (Physical Downlink Control Channel), a PUCCH (Physical Uplink Control Channel), an RACH (Random Access Channel), Downlink Control Information (DCI) including a Random Access Radio Network Temporary Identifier (RA-RNTI), a Physical Broadcast Channel (PBCH), and the like.

The data channel includes a PDSCH (Physical Downlink Shared Channel), a PUSCH (Physical Uplink Shared Channel), and the like. Data here means data that is transmitted via a data channel. The data channel may be substituted with a shared channel.

The control signal and reference signal processing unit 240 may receive Downlink Control Information (DCI). The DCI includes existing fields to store DCI formats, a carrier indicator (CI), a BWP indicator, an FDRA (Frequency Domain Resource Allocation), a TDRA (Time Domain Resource Allocation), an MCS (Modulation and Coding Scheme), an HPN (HARQ Process Number), an NDI (New Data Indicator), an RV (Redundancy Version), and the like.

A value stored in a DCI Format field is an information element to specify a format of the DCI. A value stored in a CI field is an information element to specify a CC to which the DCI is applied. A value stored in a BWP indicator field is an information element to specify a BWP to which the DCI is applied. The BWP that can be specified by the BWP indicator is configured by an information element (BandwidtPart-Config) included in an RRC message. A value stored in an FDRA field is an information element to specify a frequency domain resource to which the DCI is applied. The frequency domain resource is identified by a value stored in the FDRA field and an information element (RA Type) included in the RRC message. A value stored in a TDRA field is an information element to specify a time domain resource to which the DCI is applied. The time domain resource is identified by a value stored in the TDRA field and an information element (pdsch-TimeDomainAllocationList, pusch-TimeDomainAllocationList) included in the RRC message. The time domain resource may be identified by a value stored in the TDRA field and a default table. A value stored in an MCS field is an information element to specify an MCS to which the DCI is applied. The MCS is identified by a value stored in the MCS and an MCS table. The MCS table may be specified by the RRC message, or identified by RNTI scrambling. A value stored in an HPN field is an information element to specify an HARQ process to which the DCI is applied. A value stored in the NDI is an information element to identify whether data to which the DCI is applied is the first transmission data. A value stored in an RV field is an information element to specify the redundancy of data to which the DCI is applied.

In the present embodiment, the control signal and reference signal processing unit 240 may include a reception unit that receives a physical broadcast channel (PBCH) to which one or more resource blocks are allocated. The PBCH is used to broadcast an information block containing system information required by the UE 200. The PBCH may be interpreted as a physical broadcast channel received using the first channel bandwidth (CBW). The first channel bandwidth may be interpreted as a channel bandwidth of 5 MHz to 400 MHz. When a second channel bandwidth narrower than the first channel bandwidth is applied, the PBCH may be interpreted as a physical broadcast channel received using the second channel bandwidth. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less.

In the present embodiment, the control signal and reference signal processing unit 240 may include a reception unit that receives a synchronization signal block (SSB). The SSB may be interpreted as a synchronization signal block that may be transmitted from the gNB 100. The SSB may be interpreted as a synchronization signal block received using the first channel bandwidth (CBW). The first channel bandwidth may be interpreted as a channel bandwidth of 5 MHz to 400 MHz. In this case, the SSB may be interpreted as a synchronization signal block arranged based on the first sync raster defined in section 5.4.3.1 of 3GPP TS38.101-1. The sync raster may be interpreted as a grid that transmits SSBs at a specific period. The sync raster configures an arrangement position in a frequency direction of a synchronization signal block (SSB) to be received by the UE 200 using the CBW.

The first sync raster may configure an arrangement position (frequency domain position) in the frequency direction of multiple frequency-divided synchronization signal blocks (SSB) when the first channel bandwidth is applied. The spacing in the frequency direction (sync raster spacing) of the first sync raster is, for example, 1.2 MHz.

When a second channel bandwidth narrower than the first channel bandwidth is applied, the SSB may be interpreted as a synchronization signal block received using the second channel bandwidth. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less.

The SSB may be interpreted as a synchronization signal block arranged based on a second sync raster whose spacing in the frequency direction is narrower than that of the first sync raster. When a second channel bandwidth narrower than the first channel bandwidth is applied, the second sync raster may configure an arrangement position (frequency domain position) of multiple frequency-divided synchronization signal blocks (SSB) in the frequency direction. The spacing in the frequency direction (sync raster spacing) of the second sync raster is, for example, 0.6 MHz. The sync raster spacing of the second sync raster is not limited to this and is sufficient to be narrower than the sync raster spacing of the first sync raster.

In the present embodiment, the control signal and reference signal processing unit 240 may include a reception unit that receives a physical downlink control channel (PDCCH) to which one or more resource blocks are allocated. The PDCCH may be interpreted as a downlink control channel mapped to a specific resource unit of a control resource set (CORESET). The CORESET may be called CORESET #0. The CORESET may be interpreted as a set of physical resources (a specific area on an NR downlink resource grid) and a set of parameters used to carry the PDCCH.

In the present embodiment, the control signal and reference signal processing unit 240 may include a reception unit that receives a control resource set (CORESET) for a physical downlink control channel (PDCCH).

In the present embodiment, the control signal and reference signal processing unit 240 may include a reception unit that receives a tracking reference signal (TRS). The TRS may be interpreted as a reference signal used for tracking time and frequency variations in a downlink.

The encoding/decoding unit 250 performs data division/connection, channel coding/decoding, and the like for each predetermined communication destination (gNB 100 or another gNB). Specifically, the encoding/decoding unit 250 divides the data output from the data transmission and reception unit 260 into predetermined sizes and performs channel coding on the divided data. The encoding/decoding unit 250 also decodes the data output from the modulation and demodulation unit 230 and connects the decoded data.

The data transmission and reception unit 260 performs transmission and reception of protocol data units (PDU) and service data units (SDU). Specifically, the data transmission and reception unit 260 performs assembly, disassembly, and the like of PDUs/SDUs in multiple layers (medium access control (MAC) layer, radio link control (RLC) layer, packet data convergence protocol (PDCP) layer, and the like). The data transmission and reception unit 260 also performs error correction and retransmission control of data on the basis of an HARQ (hybrid automatic repeat request).

In the present embodiment, the data transmission and reception unit 260 may include a transmission unit that transmits terminal capability information (UE capability) indicating that a tracking reference signal (TRS) can be received to which a resource block (Physical RB, PRB) of a specific size is allocated. The terminal capability information may be interpreted as information for notifying the gNB 100 that when a second channel bandwidth (CBW) narrower than the first channel bandwidth (CBW) is applied, the UE 200 can receive (support) a tracking reference signal to which a resource block of a specific size corresponding to the second channel bandwidth is allocated.

In the present embodiment, the data transmission and reception unit 260 may include a transmission unit that transmits terminal capability information (UE capability) indicating that a specific bandwidth part (BWP) can be configured. The specific bandwidth part may be interpreted as a BWP of a specific size, configured to a second channel bandwidth (CBW) narrower than the first channel bandwidth (CBW). As described above, the second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. The terminal capability information may be interpreted as information for notifying the gNB 100 that when a second channel bandwidth narrower than the first channel bandwidth is applied, the UE 200 can receive (support) a tracking reference signal allocated to a bandwidth part of a specific size, configured to the second channel bandwidth.

The control unit 270 controls each of the functional blocks configuring the UE 200.

In the radio communication system 10, an SSB (SS/PBCH Block) including a synchronization signal (SS: Synchronization Signal) and a downlink physical broadcast channel (PBCH: Physical Broadcast CHannel) may be used.

The SSB is periodically transmitted from the network to mainly perform detection of a cell ID and reception timing when the UE 200 starts communication. In NR, the SSB is also used to measure reception quality of each cell. As the transmission period (periodicity) of the SSB, 5, 10, 20, 40, 80, 160 milliseconds or the like may be specified. Note that for the UE 200 at an initial access, a transmission period of 20 milliseconds may be assumed.

In the present embodiment, when a second channel bandwidth (CBW) narrower than the first channel bandwidth (CBW) is applied, the control unit 270 may include a control unit that assumes a physical broadcast channel to which remaining resource blocks are allocated, obtained by excluding a part of resource blocks corresponding to the first channel bandwidth. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. When a part of resource blocks corresponding to the first channel bandwidth is subject to puncture processing, remaining resource blocks obtained by excluding a part of resource blocks corresponding to the first channel bandwidth may be interpreted as remaining resource blocks that are not subject to the puncture processing. The puncture processing performs encoding on the assumption that an allocated resource can be used, but may be interpreted as not mapping a symbol to a resource that is not used actually (freeing up a resource).

In the present embodiment, the control unit 270 may include a control unit that assumes, when a second channel bandwidth narrower than the first channel bandwidth is applied, a physical broadcast channel where a part of resource blocks corresponding to the first channel bandwidth is allocated to a position different from a position of a remaining resource block in the time direction. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. A specific example of a physical broadcast channel will be described below where a part of resource blocks corresponding to the first channel bandwidth is allocated to a position different from that of remaining resource blocks in the time direction.

In the present embodiment, the control unit 270 may assume a payload smaller than a payload included in a physical broadcast channel to which resource blocks corresponding to the above first channel bandwidth are allocated, as a physical broadcast channel to which remaining resource blocks are allocated. When a second channel bandwidth narrower than the first channel bandwidth is applied, the physical broadcast channel to which remaining resource blocks are allocated may be interpreted as a PBCH to which remaining resource blocks are allocated, obtained by excluding a part of resource blocks corresponding to the first channel bandwidth. Specifically, the PBCH may be interpreted as a PBCH to which a resource block corresponding to the second channel bandwidth of 5 MHz or less is allocated.

In the present embodiment, the control unit 270 may include a control unit that assumes, when a second channel bandwidth narrower than the first channel bandwidth is applied, a synchronization signal block arranged based on a second sync raster whose spacing in the frequency direction is narrower than that of the first sync raster which configures an arrangement position in the frequency direction of a synchronization signal block received using the first channel bandwidth. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. The second sync raster may be interpreted as a sync raster having a narrower width in the frequency direction than the first sync raster described above. The spacing in the frequency direction (sync raster spacing) of the second sync raster is, for example, 0.6 MHz. The sync raster spacing of the second sync raster is not limited to this and is sufficient to be narrower than the sync raster spacing of the first sync raster.

In the present embodiment, the control unit 270 may include a control unit that assumes, when a second channel bandwidth narrower than the first channel bandwidth is applied, a physical downlink control channel (PDCCH) to which remaining resource blocks are allocated, obtained by excluding a part of resource blocks corresponding to the first channel bandwidth. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. When a part of resource blocks corresponding to the first channel bandwidth is subject to puncture processing, remaining resource blocks obtained by excluding a part of resource blocks corresponding to the first channel bandwidth may be interpreted as remaining resource blocks that are not subject to the puncture processing. The puncture processing may be interpreted as described above.

In the present embodiment, the control unit 270 may include a control unit that assumes, when a second channel bandwidth narrower than the first channel bandwidth is applied, a physical downlink control channel (PDCCH) to which a part of resource blocks corresponding to the first channel bandwidth is not allocated, and the remaining resource block is allocated. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. The physical downlink control channel to which remaining resource blocks are allocated may be interpreted as a channel to which only resource blocks corresponding to the second channel bandwidth are allocated.

In the present embodiment, the control unit 270 may include a control unit that assumes, when a second channel bandwidth narrower than the first channel bandwidth is applied, a physical downlink control channel to which a smaller number of resource blocks than resource blocks corresponding to the first channel bandwidth are allocated.

In the present embodiment, the control unit 270 may include a control unit that assumes, when a second channel bandwidth narrower than the first channel bandwidth is applied, a second control resource set (CORESET) whose position in the frequency direction is different from that of a first control resource set (CORESET) arranged based on a sync raster for configuring an arrangement position in the frequency direction of a synchronization signal block (SSB) received using the first channel bandwidth. The sync raster may be interpreted as a sync raster defined in section 5.4.3.1 of 3GPP TS38.101-1. The sync raster may configure an arrangement position in the frequency direction (frequency domain position) of multiple frequency-divided synchronization signal blocks (SSB) received using the first channel bandwidth. The spacing in the frequency direction (sync raster spacing) of the sync raster is, for example, 1.2 MHz. The second control resource set having a different position in the frequency direction may be interpreted as a sync raster transmitted from the gNB 100 whose position in the frequency direction is shifted by a specific frequency compared to that of the first control resource set. The second control resource set having a different position in the frequency direction may be interpreted as a sync raster having a different offset value (RB offset value) in the frequency direction from a sync raster defined in section 5.4.3.1 of 3GPP TS38.101-1.

In the present embodiment, the control unit 270 may include a control unit that assumes, when a second channel bandwidth narrower than the first channel bandwidth is applied, a tracking reference signal (TRS) to which a resource block of a specific size corresponding to the second channel bandwidth is allocated. The specific size may be interpreted as the number of resource blocks corresponding to a CBW in a frequency band of 5 MHz or less. Specifically, when a second channel bandwidth narrower than the first channel bandwidth is applied, the control unit 270 may assume that a TRS received by the control signal and reference signal processing unit 240 is a reference signal to which a resource block corresponding to the second channel bandwidth is allocated. Note that when the number of subcarriers is 12, the Sub-Carrier Spacing is 15 kHz, and the CBW is 3.0 MHz, resource blocks of the specific size are approximately 16 PRBs.

In the present embodiment, the control unit 270 may assume a bandwidth part (BWP) of a specific size, configured to a second channel bandwidth. Specifically, a TRS received by the control signal and reference signal processing unit 240 may be interpreted as a reference signal allocated to a BWP of a specific size, configured to a second channel bandwidth. The specific size may be interpreted as the number of resource blocks corresponding to a CBW in the frequency band of 5 MHz or less. Specifically, when a second channel bandwidth narrower than the first channel bandwidth is applied, the control unit 270 may assume that a TRS received by the control signal and reference signal processing unit 240 is a reference signal allocated to a BWP configured to the second channel bandwidth.

Second, a functional block configuration of the gNB 100 will be described.

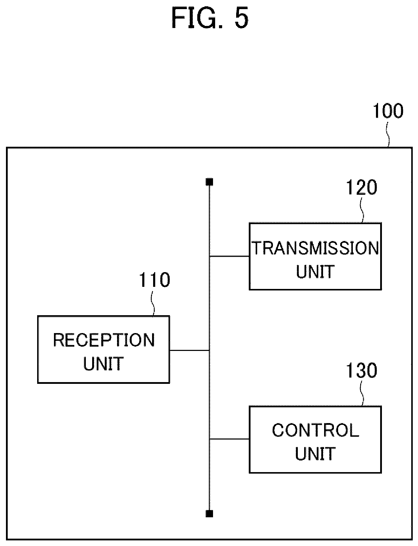

FIG. 5 is a functional block configuration diagram of the gNB 100. As illustrated in FIG. 5, the gNB 100 includes a reception unit 110, a transmission unit 120, and a control unit 130.

The reception unit 110 receives various signals from UEs 200. The reception unit 110 may receive UL signals via a PUCCH or PUSCH.

The transmission unit 120 transmits various signals to UEs 200. The transmission unit 120 may transmit DL signals via a PDCCH or PDSCH. In the present embodiment, the transmission unit 120 may include a communication unit that communicates with UEs 200.

In the present embodiment, the transmission unit 120 may include a transmission unit that transmits a physical broadcast channel (PBCH) to which one or more resource blocks are allocated. The PBCH may be used to broadcast an information block containing system information required by the UE 200. The PBCH may be interpreted as a physical broadcast channel received using the first channel bandwidth (CBW). The first channel bandwidth may be interpreted as a channel bandwidth of 5 MHz to 400 MHz. When a second channel bandwidth narrower than the first channel bandwidth is applied, the PBCH may be interpreted as a physical broadcast channel received using the second channel bandwidth. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less.

In the present embodiment, the transmission unit 120 may include a transmission unit that transmits a physical downlink control channel (PDCCH) to which one or more resource blocks are allocated. The PDCCH may be interpreted as a downlink control channel mapped to a specific resource unit of a control resource set (CORESET).

In the present embodiment, the transmission unit 120 may include a transmission unit that transmits a tracking reference signal (TRS). The TRS may be interpreted as a reference signal used for tracking time and frequency variations in a downlink.

The control unit 130 controls the gNB 100.

In the present embodiment, the control unit 130 may include a control unit that assumes, when a second channel bandwidth (CBW) narrower than the first channel bandwidth (CBW) is applied, a physical broadcast channel to which remaining resource blocks are allocated, obtained by excluding a part of resource blocks corresponding to the first channel bandwidth. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. When a part of resource blocks corresponding to the first channel bandwidth is subject to puncture processing, remaining resource blocks obtained by excluding a part of resource blocks corresponding to the first channel bandwidth may be interpreted as remaining resource blocks that are not subject to the puncture processing.

In the present embodiment, the control unit 130 may include a control unit that assumes, when a second channel bandwidth (CBW) narrower than the first channel bandwidth (CBW) is applied, a physical downlink control channel to which remaining resource blocks are allocated, obtained by excluding a part of resource blocks corresponding to the first channel bandwidth. The first channel bandwidth may be interpreted as a channel bandwidth of 5 MHz to 400 MHz. The second channel bandwidth may be interpreted as a specific bandwidth (1 MHz, 2 MHz, 3 MHz, 4 MHz, etc.) in a frequency band of 5 MHz or less. The specific bandwidth is not limited to this and may be a certain bandwidth in a frequency band of 5 MHz or less. When a part of resource blocks corresponding to the first channel bandwidth is subject to puncture processing, remaining resource blocks obtained by excluding a part of resource blocks corresponding to the first channel bandwidth may be interpreted as remaining resource blocks that are not subject to the puncture processing.

In the present embodiment, the control unit 130 may include a control unit that assumes, when a second channel bandwidth (CBW) narrower than the first channel bandwidth (CBW) is applied, a tracking reference signal (TRS) to which a resource block of a specific size corresponding to the second channel bandwidth is allocated. The specific size may be interpreted as the number of resource blocks corresponding to a CBW in a frequency band of 5 MHz or less. Specifically, when a second channel bandwidth narrower than the first channel bandwidth is applied, the control unit 270 may assume that a transmitted TRS is a reference signal to which a resource block corresponding to the second channel bandwidth is allocated.

### (3) Operation of radio communication system

Next, operation of the radio communication system 10 will be described. Specifically, an operation example of the radio communication system 10 will be described which is capable of properly transmitting and receiving a channel or a signal between a radio base station and a UE even when a bandwidth of 5 MHz or less is applied.

### (3.1) Assumptions and issues

Issues will be described in properly transmitting and receiving a channel or a signal between a radio base station and a UE even when a bandwidth of 5 MHz or less is applied.

A CBW of 5 MHz to 400 MHz is specified in NR. In 3GPP, it is discussed to use for NR a bandwidth of less than 5 MHz (second channel bandwidth) which is narrower than the channel bandwidth of 5 MHz to 400 MHz (first channel bandwidth) (for example, see Non-Patent Literature 1). By using a bandwidth of less than 5 MHz for NR, it becomes possible to support use cases such as smart grids and railway mobile communication systems that require low latency.

However, the conventional technology does not support a bandwidth of 5 MHz or less for NR. Therefore, when a CBW is 5 MHz or less, due to the occupied bandwidth, there is an issue that a channel or a signal is generated that cannot be transmitted and received between a radio base station and a UE in conventional formats.

Specifically, the following issues are assumed.

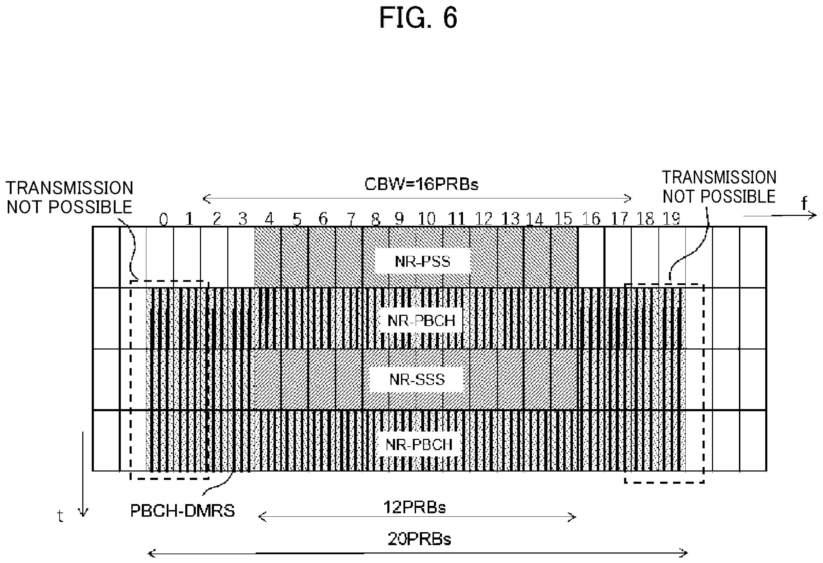

First issue: when the number of subcarriers is 12, the Sub-Carrier Spacing is 15 kHz, and the CBW is 3.6 MHz, the number of PRBs is 20 PRBs (12 SCs * 20 PRBs * 15 kHz = 3.6 MHz). Meanwhile, when the number of subcarriers is 12, the Sub-Carrier Spacing is 15, and the CBW is 3.0 MHz, the number of PRBs that can be allocated is approximately 16 PRBs. In this way, due to the narrowing of the CBW, the UE 200 and the gNB 100 may not be able to receive the entire PBCH. Specifically, as illustrated in FIG. 6, when the CBW is 3.0 MHz, the UE 200 cannot receive the entire PBCH (channel to which 20 PRBs are allocated) when the CBW is 3.6 MHz.

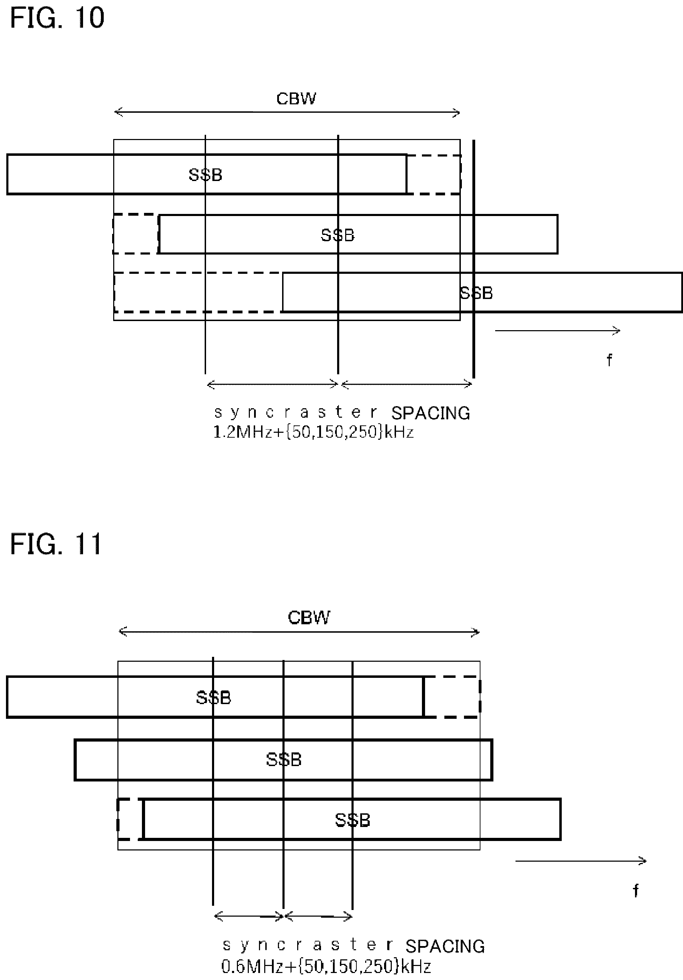

Another first issue: depending on a position in the frequency direction of a CBW that is actually operated, frequency resources allocated to an SSB are sometimes not utilized to the maximum. Specifically, as illustrated in FIG. 10, when the sync raster spacing is 1.2 MHz and the CBW is 3 MHz, the SSB is transmitted from the gNB 100 to the UE 200 at 1.2 MHz intervals. In this case, frequency resources of a portion indicated by the dashed line in the frequency direction of the SSB are sometimes not utilized effectively. That is, when a second channel bandwidth narrower than the first channel bandwidth is applied, it is possible that a part of resource blocks corresponding to the second channel bandwidth is not utilized effectively.

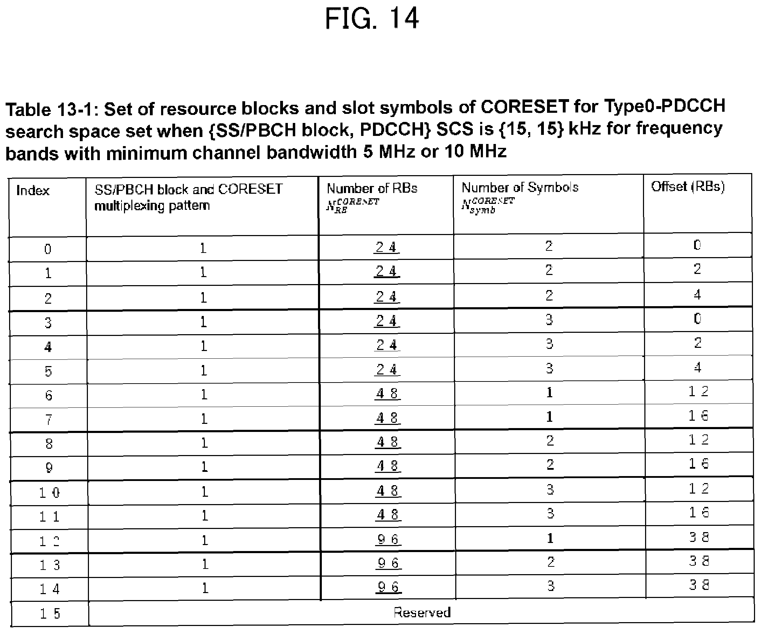

Second issue: when a second channel bandwidth (e.g., 3 MHz) narrower than the first channel bandwidth is applied, the number of PRBs is approximately 16 PRBs. As illustrated in FIG. 14, when Table 13-1 defined in section 13 of 3GPP TS38.213 is used, the minimum number of PRBs is 24 PRBs (12 SCs * 24 PRBs * 15 kHz = 4.32 MHz). Thus, when a second channel bandwidth (e.g., 3 MHz) is applied, it is possible that the UE 200 is unable to receive the entire channel.

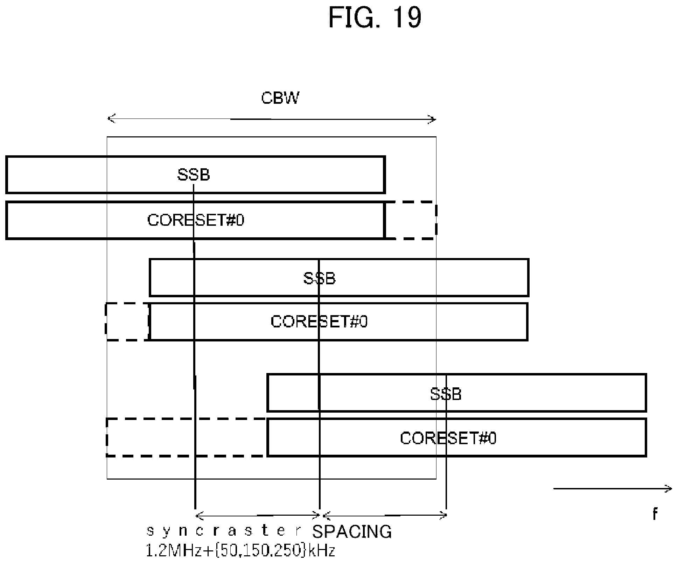

Another second issue: depending on a position in the frequency direction of a CBW actually operated, frequency resources allocated to CORESET#0 are sometimes not utilized to the maximum. Specifically, as illustrated in FIG. 19, when the sync raster spacing is 1.2 MHz and the CBW is 3 MHz, CORESET#0 is transmitted from the gNB 100 to the UE 200 at 1.2 MHz intervals. In this case, frequency resources of a portion indicated by the dashed line in the frequency direction of CORESET#0 are sometimes not utilized effectively. That is, when a second channel bandwidth narrower than the first channel bandwidth is applied, it is possible that a part of resource blocks corresponding to the second channel bandwidth is not utilized effectively.

Third issue: according to the existing specification, since the number of PRBs of a BWP is equal to the number of PRBs of a TRS, when the CBW (approximately 16 PRBs) is 3 MHz, the TRS can be transmitted and received if the BWP is configured to be less than the CBW. However, since a TRS for a BWP of optional size between 3 and 5 MHz is not specified for the UE, it is possible that the UE 200 is unable to transmit and receive the TRS properly.

To solve such issues, the following multiple operation examples are considered. Note that the multiple operation examples described below may be used individually, or in combination of two or more.

### (3.2) Operation examples

Operation examples that can solve the above issues will be described below.

### (3.2.1) Operation example 1

Operation example 1 which can solve the first issue will be described below.

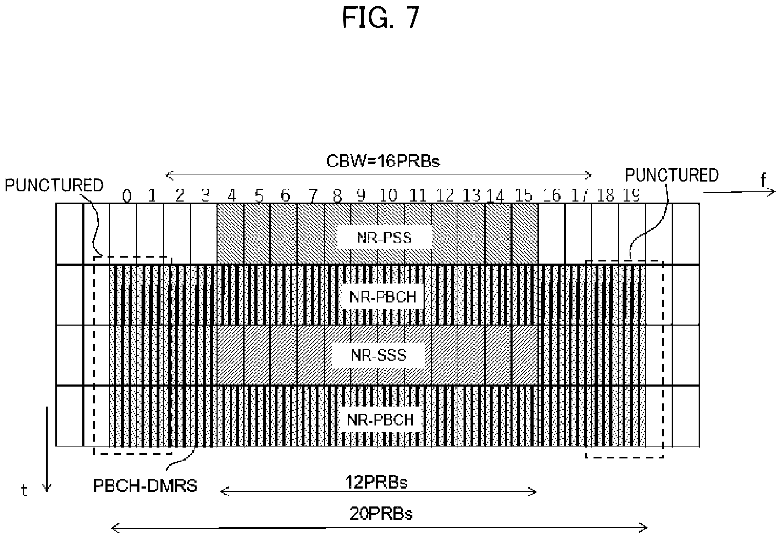

FIG. 7 is a diagram for explaining operation example 1-1. When a second channel bandwidth (CBW) narrower than the first channel bandwidth (CBW) is applied, the control unit 270 of the UE 200 may assume transmission of a physical broadcast channel to which remaining resource blocks are allocated, obtained by excluding (puncturing) a part of resource blocks corresponding to the first channel bandwidth. In the example of FIG. 7, among multiple resource blocks corresponding to the first channel bandwidth, resource blocks positioned at ends in the frequency direction are punctured. Note that a resource block positioned near the center in the frequency direction may be punctured. Thus, a physical broadcast channel to which resource blocks corresponding to the second channel bandwidth are allocated can be properly transmitted and received. Note that which RE/PRB is punctured may be specified in the specification or may be different per band/region.

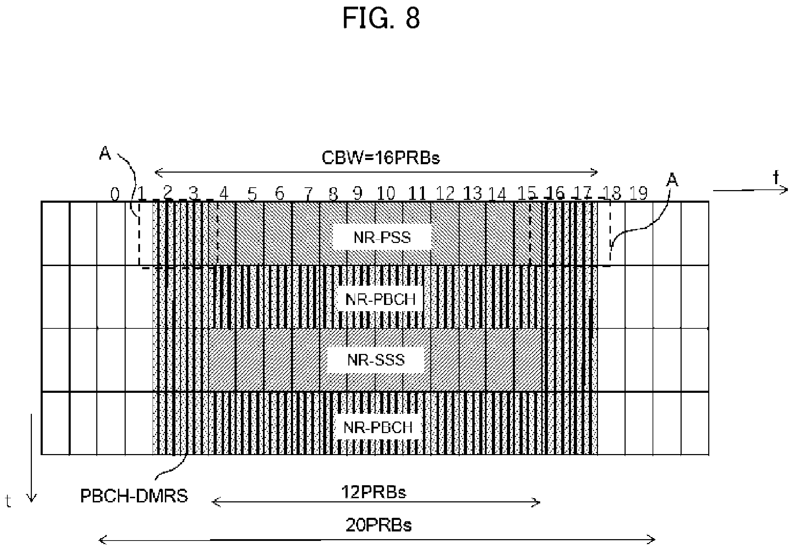

FIG. 8 is a diagram for explaining operation example 1-2). When a second channel bandwidth narrower than the first channel bandwidth is applied, the control unit 270 of the UE 200 may assume a physical broadcast channel where a part of resource blocks corresponding to the first channel bandwidth is allocated at a position A different from a position of remaining resource blocks in the time direction. In the example of FIG. 8, resource blocks positioned at the ends in the frequency direction among multiple resource blocks corresponding to the first channel bandwidth are allocated to the different position A in the time direction. Thus, a physical broadcast channel to which resource blocks corresponding to the second channel bandwidth are allocated can be properly transmitted and received. Note that which RE/PRB is allocated to a different position may be specified in the specification or may be different per band/region. Resource blocks allocated to a different position in the time direction are not limited to resource blocks positioned at the ends in the frequency direction, and may be resource blocks positioned at a position other than the ends in the frequency direction. The position of the allocated resource blocks is not limited to a different position in the time direction and may be a different position in the frequency direction.

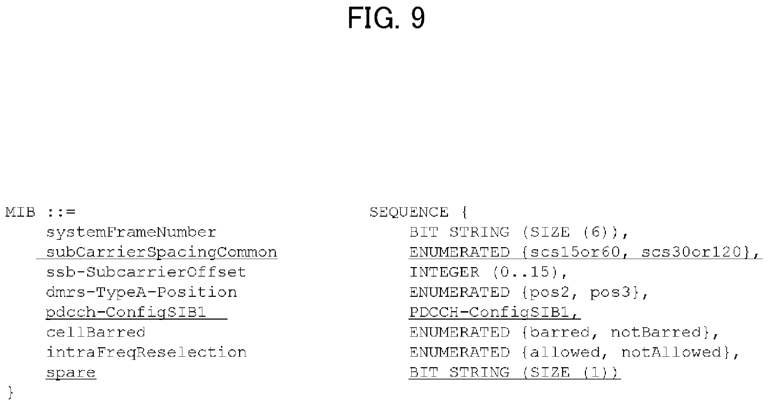

FIG. 9 is a diagram for explaining operation example 1-3). The control unit 270 of the UE 200 may assume that a payload smaller than a payload included in a physical broadcast channel to which resource blocks corresponding to the first channel bandwidth indicated in operation example 1-1 and/or operation example 1-2 are allocated, is a physical broadcast channel to which remaining resource blocks are allocated. That is, the UE 200 may assume a different payload from the existing PBCH payload. Specifically, the gNB 100 need not transmit at least one of the multiple IEs underlined in FIG. 9. Specifically, the gNB 100 may make the size of the IE (subCarrierSpacingCommon, pdcch-ConfigSIB1, and spare (spare bits)) transmitted in an MIB (Master Information Block) smaller than the existing PBCH payload. Regardless of a value notified with UE200subCarrierSpacingCommon, a 15 kHz SCS may be assumed. Consequently, the payload included in the physical broadcast channel is reduced, and thus frequency resources can be effectively utilized.

Note that operation example 1-1 described above may be combined with operation example 1-2. Operation example 1-3 may be combined with either operation example 1-1 or operation example 1-2.

FIG. 11 is a diagram for explaining operation example 1'-0. The UE 200 may assume a sync raster different from the existing sync cluster (clause 5.4.3.1 in TS38.101-1). That is, the UE 200 may assume that a received synchronization signal block is a synchronization signal block arranged based on the second sync raster whose spacing in the frequency direction is narrower than that of the first sync raster. Specifically, the UE 200 may assume a 0.6 MHz sync cluster. Thus, when a second channel bandwidth narrower than the first channel bandwidth is applied, the UE 200 can effectively utilize frequency resources of a portion indicated by the dashed line in the frequency direction of the SSB, that is, a part of resource blocks corresponding to the second channel bandwidth.

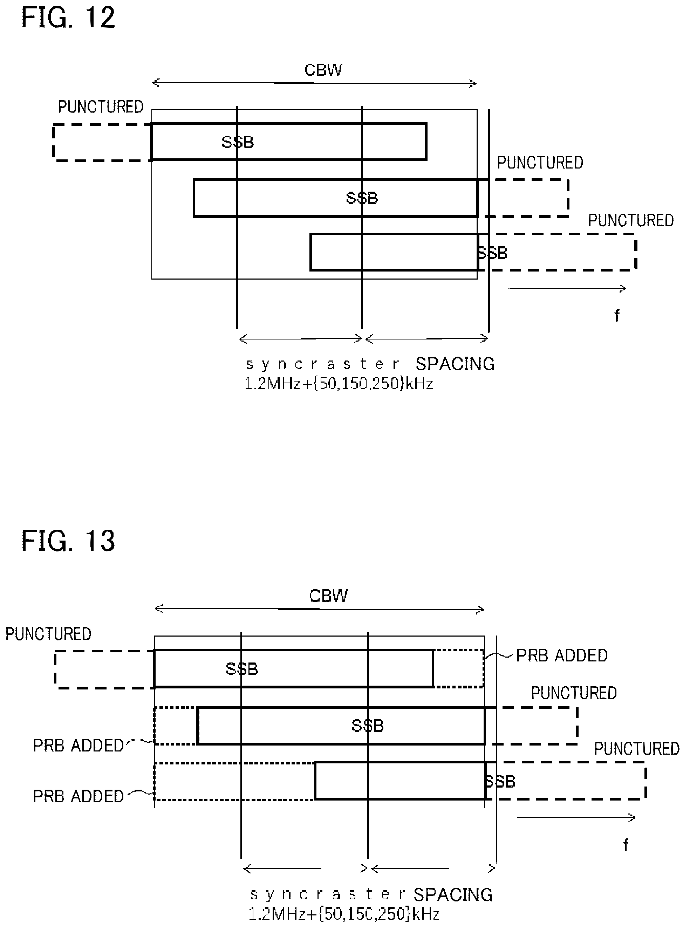

FIG. 12 is a diagram for explaining operation example 1'-1. The UE 200 may assume that a specific RE/PRB of a PBCH and a DMRS for PBCH is punctured and transmitted. In the example of FIG. 12, resource blocks positioned at an end in the frequency direction among multiple resource blocks corresponding to the first channel bandwidth are punctured. Note that resource blocks positioned near the center in the frequency direction may be punctured. Thus, a physical broadcast channel to which resource blocks corresponding to the second channel bandwidth are allocated can be properly transmitted and received. Note that which RE/PRB is punctured may be specified in the specification or may be different per band/region. The UE 200 and/or the gNB 100 may assume multiple puncture position candidates and perform blind detection. The UE 200 and/or the gNB 100 may assume the above puncture only on a specific sync raster.

FIG. 13 is a diagram for explaining operation example 1'-2. The UE 200 may assume a different RE/PRB/symbol arrangement from that of the existing PBCH and DMRS for PBCH. In the example of FIG. 13, a resource block is added to an end in the frequency direction of multiple resource blocks corresponding to the first channel bandwidth or the second channel bandwidth. In the example of FIG. 13, a part of the multiple resource blocks is punctured. Thus, a physical broadcast channel to which resource blocks corresponding to the second channel bandwidth are allocated can be properly transmitted and received. Note that which RE/PRB is punctured may be specified in the specification or may be different per band/region. The UE 200 and/or the gNB 100 may assume multiple puncture position candidates and perform blind detection. The UE 200 and/or the gNB 100 may assume the above puncture only on a specific sync raster.

### (3.2.2) Operation example 2

Operation example 2 which can solve the second issue will be described below.

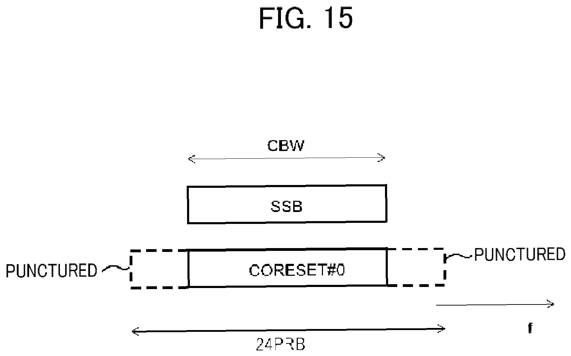

FIG. 15 is a diagram for explaining operation example 2-1. When a second channel bandwidth narrower than the first channel bandwidth is applied, the control unit 270 of the UE 200 may assume a physical downlink control channel (PDCCH) to which remaining resource blocks are allocated, obtained by excluding a part of resource blocks corresponding to the first channel bandwidth. Specifically, when receiving controlResourceSetZero in pdcch-ConfigSIB1 (see Table 13-1 as defined in section 13 of 3GPP TS38.213), the UE 200 may assume that a specific RE/PRB of the PDCCH and the DMRS for PDCCH is punctured and transmitted. Thus, a physical downlink control channel to which resource blocks corresponding to the second channel bandwidth are allocated may be properly transmitted and received. Note that which RE/PRB is punctured may be specified in the specification or may be different per band/region. In addition, any RE/PRB that does not include an SSB may be punctured.

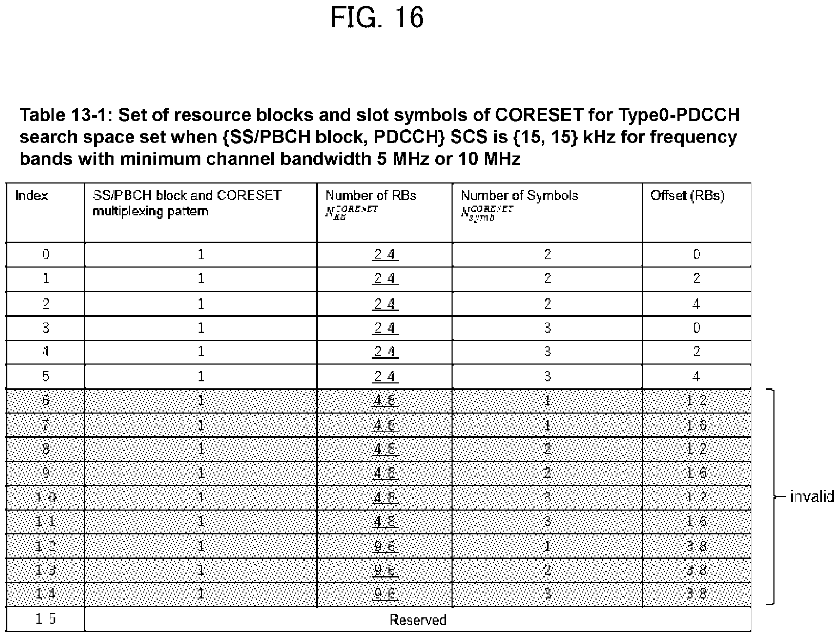

FIG. 16 is a diagram for explaining operation example 2-1. When receiving controlResourceSetZero in pdcch-ConfigSIB1 (see Table13-1 as defined in section 13 of 3GPP TS38.213), the UE 200, which transmits and receives signals at a specific frequency, may assume to be notified of only a specific index (for example, any of 0 to 5). The UE 200 may also assume that the number of bits of controlResourceSetZero (for example, 3 bits) is different from the existing value (4 bits). Thus, a physical downlink control channel to which resource blocks corresponding to the second channel bandwidth are allocated may be properly transmitted and received.

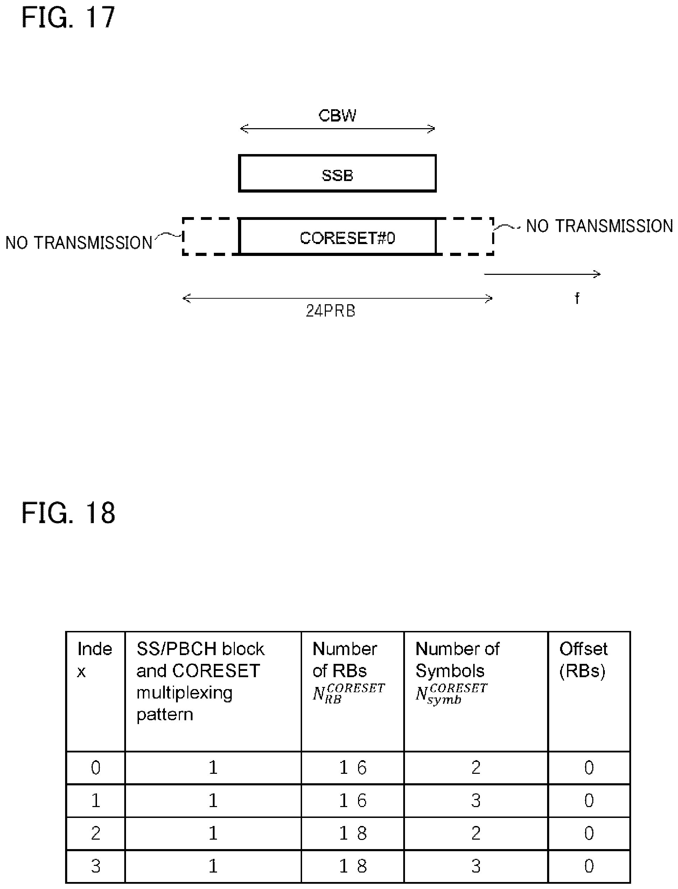

FIG. 17 is a diagram for explaining operation example 2-1a. When a second channel bandwidth narrower than the first channel bandwidth is applied, the control unit 270 of the UE 200 may assume a physical downlink control channel (PDCCH) to which a part of resource blocks corresponding to the first channel bandwidth is not allocated and the remaining resource blocks are allocated. Specifically, when receiving controlResourceSetZero in pdcch-ConfigSIB1 (see Table 13-1 as defined in section 13 of 3GPP TS38.213), the UE 200 may assume that a PDCCH and a DMRS for PDCCH are not transmitted with a specific RE/PRB. Thus, a physical downlink control channel to which resource blocks corresponding to the second channel bandwidth are allocated may be properly transmitted and received. Note that which RE/PRB is not transmitted may be specified in the specification or may be different per band/region. Also, any RE/PRB that does not include an SSB may not be transmitted.

### Alt1 of operation example 2-1a:

The UE 200 may skip monitoring of a PDCCH monitoring candidate that overlaps the RE/PRB. Thus, a physical downlink control channel to which resource blocks corresponding to the second channel bandwidth are allocated may be properly transmitted and received.

### Alt2 of operation example 2-1a:

The UE 200 may assume that no CCE is mapped to the RE/PRB. Thus, a physical downlink control channel to which resource blocks corresponding to the second channel bandwidth are allocated may be properly transmitted and received.

### Alt3 of operation example 2-1a:

The UE 200 may assume that when the total number of PRBs on which PDCCH can be transmitted is less than 6*AL (Aggregation Level), no PDCCH is transmitted on the AL. Thus, a physical downlink control channel resource blocks corresponding to the second channel bandwidth are allocated may be properly transmitted and received.

FIG. 18 is a diagram for explaining operation example 2-2. When a second channel bandwidth narrower than the first channel bandwidth is applied, the control unit 270 of the UE 200 may assume a physical downlink control channel to which a smaller number of resource blocks are allocated than resource blocks corresponding to the first channel bandwidth. Specifically, the UE 200 may assume an RE/PRB/symbol arrangement different from that of the existing PDCCH and DMRS for PDCCH. Thus, a physical downlink control channel to which resource blocks corresponding to the second channel bandwidth are allocated may be properly transmitted and received. Note that which RE/PRB arrangement may be specified in the specification or may be different per band/region. For example, a new table notifying controlResourceSet0 may be specified. The gNB 100 and/or the UE 200 may also assume that the number of bits of controlResourceSet0 (for example, 2 bits) is different from the existing value (4 bits). The gNB 100 and/or the UE 200 may assume that an RB offset is 0 between the SSB and CORESET#0.

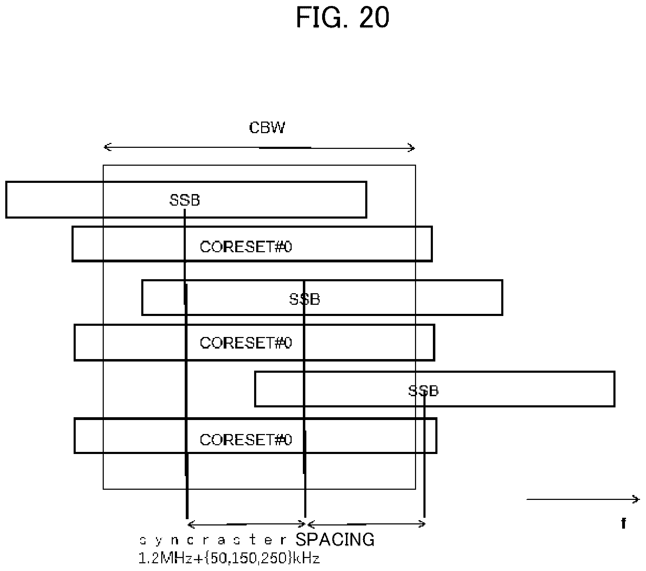

FIG. 20 is a diagram for explaining operation example 2'. When a second channel bandwidth narrower than the first channel bandwidth is applied, the control unit 270 of the UE 200 may assume a second control resource set (CORESET) whose position in the frequency direction is different from that of a first control resource set (CORESET) arranged based on a sync raster for configuring an arrangement position in the frequency direction of a synchronization signal block (SSB) received using the first channel bandwidth. Specifically, the UE 200 may assume an RB offset value different from the existing RB offset value in such a manner that frequency resources of a portion indicated by the dashed line of CORESET#0 illustrated in FIG. 19 can be effectively utilized. Thus, when a second channel bandwidth narrower than the first channel bandwidth is applied, a part of resource blocks corresponding to the second channel bandwidth can be effectively utilized.

The RB offset value may be specified in the specification. Also, a table different from the existing table (see Table13-1 as defined in section 13 of 3GPP TS38.213) may be specified, and the UE 200 may assume an RB offset value different from the existing RB offset value by receiving the table. The UE 200 may assume an RB offset value different from the existing RB offset value only on a specific sync raster.

### (3.2.3) Operation example 3

Operation example 3 which can solve the third issue will be described below.

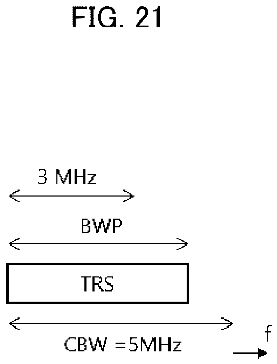

FIG. 21 is a diagram for explaining operation example 3. When a second channel bandwidth narrower than the first channel bandwidth is applied, the control unit 270 of the UE 200 may assume a tracking reference signal to which resource blocks of a specific size corresponding to the second channel bandwidth are allocated. That is, the UE 200 may support a TRS of optional size configured in a specific nominal CBW (e.g., 3 to 5 MHz). In this case, a capability bit may be specified to notify that the function is supported. That is, the UE 200 may transmit terminal capability information indicating that a tracking reference signal can be received to which a resource block of optional size is allocated. The optional size may be limited to a specific granularity (e.g., 4 PRBs). In this case, the size of the resource block may be, for example, 12 PRBs, 16 PRBs, 20 PRBs, 24 PRBs, 28 PRBs, or the like. When the number of PRBs of a TRS configured in the UE 200 is less than the number of PRBs of a BWP, the UE 200 does not assume that the total number of PRBs, which do not overlap PRBs which transmit a CSI-RS for tracking, allocated for DL transmission, is 4 or more.

The UE 200 may assume a BWP of optional size configured in a specific Nominal CBW (e.g., 3 to 5 MHz). In this case, a capability bit which notifies that the function is supported may be specified. That is, the UE 200 may transmit terminal capability information indicating that the BWP can be configured.

### (4) Actions and effects

According to the above-described embodiment, the following actions and effects are obtained.

The UE 200 according to an embodiment of the present disclosure can properly transmit and receive a physical broadcast channel to which a resource block corresponding to the second channel bandwidth is allocated, by assuming that a physical broadcast channel including remaining resource blocks, excluding a specific resource block, among multiple resource blocks is transmitted.

When a second channel bandwidth narrower than the first channel bandwidth is applied, the UE 200 according to an embodiment of the present disclosure can properly transmit and receive a physical downlink control channel to which resource blocks corresponding to the second channel bandwidth are allocated, by assuming a physical downlink control channel to which remaining resource block are allocated, obtained by excluding a part of resource blocks corresponding to the first channel bandwidth.

When a second channel bandwidth narrower than the first channel bandwidth is applied, the UE 200 according to an embodiment of the present disclosure can properly transmit and receive a tracking reference signal to which resource blocks corresponding to the second channel bandwidth are allocated, by assuming a tracking reference signal to which resource blocks of a specific size corresponding to the second channel bandwidth are allocated.

### (5) Other embodiments

Although the embodiment has been described above, it is obvious to those skilled in the art that the present invention is not limited to the description of the embodiment and that various modifications and improvements thereof are possible.

In the above description, terms such as configure, activate, update, indicate, enable, specify, and select may be read interchangeably. Similarly, terms such as link, associate, correspond, and map may be read interchangeably, and terms such as allocate, assign, monitor, and map may be read interchangeably.

In addition, terms such as specific, dedicated, UE-specific, and UE-dedicated may be read interchangeably. Similarly, terms such as common, shared, group-common, UE-common, and UE-shared may be read interchangeably.

In the present disclosure, the terms such as "precoding", "precoder", "weight (precoding weight)", "quasi-co-location (QCL)", "Transmission Configuration Indication state (TCI state)", "spatial relation", "spatial domain filter", "transmission power", "phase rotation", "antenna port", "antenna port group", "layer", "the number of layers", "rank", "resource", "resource set", "resource group", "beam", "beam width", "beam angle", "antenna", "antenna element", "panel", and so on can be used interchangeably.

The block diagrams (FIGs. 4 and 5) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but the functions are by no means limited to these. For example, a functional block (component) to implement a function of transmission may be referred to as a "transmitting section (transmitting unit)," a "transmitter". The method for implementing each component is not particularly limited as described above.

Furthermore, the above-described gNB 100 (the apparatus), UE 200 (the apparatus) and AMF may function as a computer that executes the processes of the radio communication method of the present disclosure. FIG. 22 is a diagram to show an example of a hardware structure of the gNB 100 and UE 200. As shown in FIG. 22, the apparatus may each be formed as a computer apparatus that includes a processor 1001, a memory 1002, a storage 1003, a communication apparatus 1004, an input apparatus 1005, an output apparatus 1006, a bus 1007, and so on.

Note that in the following description, the word such as an apparatus can be read as a circuit, a device, a section, a unit, and so on. The hardware structure of the apparatus may be configured to include one or more of apparatuses shown in the drawings, or may be configured not to include part of apparatuses.

Each function of the apparatus (see FIGs. 4 and 5) is implemented by one of hardware elements or the combination of the hardware elements in the computer apparatus.

Each function of the apparatus is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The above-described various processes may be performed by a single processor 1001, or may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and so on. The memory 1002 may be referred to as a "register," a "cache," a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of a compact disc (Compact Disc ROM (CD-ROM) and so on), a hard disk drive, a flexible disk, a magneto-optical disk (for example, a compact disc, a digital versatile disc, a Blu-ray (registered trademark) disk), a smart card, a flash memory device (for example, a card, a stick, and a key drive), a floppy (registered trademark) disk, a magnetic stripe, and so on. The storage 1003 may be referred to as "auxiliary storage apparatus." The above recording medium may be a database including at least one of the memory 1002 and the storage 1003, a server, or any other appropriate medium.

The communication apparatus 1004 is hardware (transmitting/receiving device) for allowing inter-computer communication via at least one of wired and wireless networks, and may be referred to as, for example, a "network device," a "network controller," a "network card," a "communication module," and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that performs output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, pieces of apparatus, including the processor 1001, the memory 1002, and others, are connected by a bus 1007 for communicating information. The bus 1007 may be formed with a single bus, or may be formed with buses that vary between pieces of apparatus.

Also, the apparatus may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information may be implemented by using physical layer signaling (for example, downlink control information (DCI), uplink control information (UCI)), higher layer signaling (for example, RRC signaling, Medium Access Control (MAC) signaling), broadcast information (master information block (MIB), system information block (SIB)), and other signals or combinations of these. Also, RRC signaling may be referred to as an "RRC message," and can be, for example, an RRC connection setup message, an RRC connection reconfiguration message, and so on.

The aspects/embodiments illustrated in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), New radio access (NX), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Specific operations which have been described in the present disclosure to be performed by the gNB 100 may, in some cases, be performed by an upper node thereof. In a network including one or a plurality of network nodes with the gNB 100, it is clear that various operations that are performed to communicate with the UE 200 can be performed by the gNB 100 and other network nodes (for example, Mobility Management Entities (MMEs), Serving-Gateways (S-GWs), and so on may be possible, but these are not limiting) other than the gNB 100, or combinations of these. According to the above, a case is described in which there is a single network node other than the gNB 100. However, a combination of multiple other network nodes may be considered (e.g., MME and S-GW) .

The information or signals may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A determination may be realized by a value (0 or 1) represented by one bit, by a boolean value (true or false), or by comparison of numerical values (e.g., comparison with a predetermined value).

Each aspect/embodiment described in the present disclosure may be used independently, may be used in combination, or may be used by switching according to operations. Further, notification of predetermined information (e.g., notification of "X") is not limited to an explicit notification, and may be performed by an implicit notification (e.g., by not performing notification of the predetermined information).

Software should be broadly interpreted to mean, regardless of whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) and wireless technologies (infrared, microwave, etc.), at least one of these wired line technologies or wireless technologies is included within the definition of the transmission medium.

Information, a signal, or the like, described in the present disclosure may be represented by using any one of various different technologies. For example, data, an instruction, a command, information, a signal, a bit, a symbol, a chip, or the like, referred to throughout the above description, may be represented by a voltage, an electric current, electromagnetic waves, magnetic fields, a magnetic particle, optical fields, a photon, or a combination thereof.

It should be noted that a term described in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "base station (BS)," a "radio base station," a "fixed station," a "NodeB," an "eNodeB (eNB)," a "gNodeB (gNB)," an "access point," a "transmission point," a "reception point," a "transmission/reception point," a "cell," a "sector," a "cell group," a "carrier," a "component carrier," and so on can be used interchangeably. The gNB 100 may be referred to as the terms such as a "macro cell," a "small cell," a "femto cell," a "pico cell," and so on.

A gNB 100 can accommodate one or a plurality of (for example, three) cells (which may be referred to as sectors). When a gNB 100 accommodates a plurality of cells, the entire coverage area of the gNB 100 can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of a gNB 100 and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases by the skilled person in the art.

At least one of a gNB 100 and a mobile station may be referred to as a "transmitting apparatus," a "receiving apparatus," a "communication apparatus," and so on. Note that at least one of a gNB 100 and a mobile station may be a device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a gNB 100 and a mobile station also includes an apparatus which does not necessarily move during communication operation. For example, at least one of a gNB 100 and a mobile station may be an Internet of Things (IoT) device such as a sensor.

Furthermore, the gNB 100 in the present disclosure may be interpreted as a mobile station (user terminal, hereinafter the same). For example, each aspect/embodiment of the present disclosure may be applied to the structure that replaces a communication between a gNB 100 and a mobile station with a communication between a plurality of mobile stations (for example, which may be referred to as "Device-to-Device (D2D)," "Vehicle-to-Everything (V2X)," and the like). In this case, the mobile station may have the functions of the gNB 100 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the mobile station in the present disclosure may be interpreted as a gNB 100. In this case, the gNB 100 may have the functions of the mobile station described above. A radio frame may be constituted of one or a plurality of frames in the time domain. Each of one or a plurality of frames may be referred to as a "subframe" in the time domain. Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of the number of symbols less than a slot. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a gNB 100 performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB **(PRB)),"** a "subcarrier group (SCG)," a "resource element group (REG),"a "PRB pair," an "RB pair" and so on.

Furthermore, a resource block may be constituted of one or a plurality of resource elements (REs). For example, one RE may be a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of one or more wires, cables, and printed electrical connections and, as a number of non-limiting and non-inclusive examples, electromagnetic energy having wavelengths in the radio frequency region, the microwave region, and the light (both visible and invisible) region.

A reference signal may be abbreviated as an "RS," and may be referred to as a "pilot", depending on which standard is applied.

The phrase "based on" as used in the present disclosure does not mean "based only on", unless otherwise specified. In other words, the phrase "based on" means both "based only on" and "based at least on".

"Means" included in the configuration of each of the above apparatuses may be replaced by "parts", "circuits", "devices", etc.

Reference to elements with designations such as "first," "second," and so on used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present disclosure is not intended to be an "exclusive or".

In the present disclosure, in the case where an article is added by translation, for example "a", "an", and "the", the disclosure may include that the noun following these articles is plural.

As used in the present disclosure, the term "determining" may encompasses a wide variety of actions. For example, "determining" may be regarded as determining to have performed judging, calculating, computing, processing, deriving, investigating, looking up (looking up, search, inquiry) (e.g., looking up in a table, a database or another data structure), ascertaining and the like. Also, "determining" may be regarded as determining to have performed receiving (e.g., receiving information), transmitting (e.g., transmitting information), inputting, outputting, accessing (e.g., accessing data in a memory) and the like. Also, "determining" may be regarded as determining to have performed resolving, selecting, choosing, establishing, comparing and the like. That is, "determining" may be regarded as determining to have performed some action. Moreover, "determining" may be read as "assuming", "expecting", "considering", and the like.

In this disclosure, the term "A and B are different" may mean "A and B are different from each other." It should be noted that the term "A and B are different" may mean "A and B are different from C." Terms such as "separated" or "combined" may be interpreted in the same way as the "different".

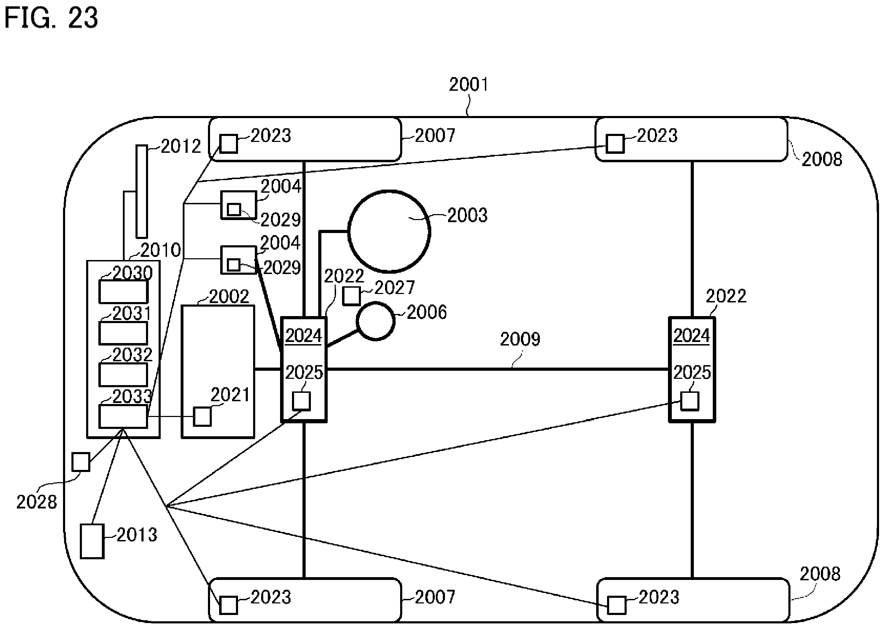

Fig. 23 shows an example of a configuration of a vehicle 2001. As shown in Fig. 23, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021-2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel or the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-29 provided in the vehicle. The electronic control unit 2010 may be referred to as an ECU (Electronic Control Unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator **(e.g.,** GNSS, etc.), map information **(e.g.,** high definition (HD) map, autonomous vehicle (AV) map, etc.), a gyro system **(e.g.,** IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the left and right front wheels 2007, the left and right rear wheels 2008, the axle 2009, the microprocessor 2031 and the memory (ROM, RAM) 2032 in the electronic control unit 2010, and the sensors 2021 to 2028 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a gNB 100, a mobile station, or the like.

The communication module 2013 transmits a current signal from a current sensor, which is input to the electronic control unit 2010, to external devices through radio communication. Also, the communication module 2013 transmits to external devices through radio communication, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, an accelerator pedal stepped-on amount signal acquired by an accelerator pedal sensor 2029, a brake pedal stepped-on amount signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like, which are input to the electronic control unit 2010.

The communication module 2013 receives various types of information (traffic information, signal information, inter-vehicle information, etc.) transmitted from the external devices and displays the received information on the information service unit 2012 provided in the vehicle 2001. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021-2028, etc., mounted in the vehicle 2001.

### <Note on operation example 1>

The UE 200 or the gNB 100 of the present embodiment may be configured as the UE 200 or the gNB 100 described in the following items.

(Item 1) A terminal (UE 200) including: a reception unit (control signal and reference signal processing unit 240) that receives a physical broadcast channel (PBCH) to which one or more resource blocks (PRBs) are allocated; and a control unit (control unit 270) that assumes, when a second channel bandwidth narrower than a first channel bandwidth (CBW) is applied, the physical broadcast channel, to which a remaining resource block is allocated which is obtained by excluding a part of the resource blocks corresponding to the first channel bandwidth.

(Item 2) A terminal (UE 200) including: a reception unit (control signal and reference signal processing unit 240) that receives a physical broadcast channel (PBCH) to which one or more resource blocks (PRBs) are allocated; and a control unit (control unit 270) that assumes, when a second channel bandwidth narrower than a first channel bandwidth (CBW) is applied, the physical broadcast channel, where a part of the resource blocks corresponding to the first channel bandwidth is allocated at a position different from a position of a remaining resource block in a time direction.

(Item 3) The terminal (UE 200) according to item 1 or 2, wherein the control unit (control unit 270) assumes that a payload smaller than a payload included in the physical broadcast channel (PBCH), to which the resource blocks corresponding to the first channel bandwidth (CBW) are allocated, is received in the physical broadcast channel (PBCH), to which the remaining resource block is allocated.

(Item 4) A terminal (UE 200) including: a reception unit (control signal and reference signal processing unit 240) that receives a synchronization signal block (SSB); and a control unit that assumes, when a second channel bandwidth narrower than a first channel bandwidth (CBW) is applied, the synchronization signal block, which is arranged based on a second sync raster whose spacing in a frequency direction is narrower than that of a first sync raster (sync raster) for configuring an arrangement position in the frequency direction of a synchronization signal block received using the first channel bandwidth.

(Item 5) A radio base station (gNB 100) including: a transmission unit that transmits a physical broadcast channel (PBCH) to which one or more resource blocks (PRBs) are allocated; and a control unit that assumes, when a second channel bandwidth narrower than a first channel bandwidth (CBW) is applied, the physical broadcast channel, to which a remaining resource block is allocated which is obtained by excluding a part of the resource blocks corresponding to the first channel bandwidth.

(Item 6) A radio communication method including: a step of receiving by a terminal (UE 200) a physical broadcast channel (PBCH) to which one or more resource blocks (PRBs) are allocated; and a step of assuming by the terminal (UE 200), when a second channel bandwidth narrower than a first channel bandwidth (CBW) is applied, the physical broadcast channel, to which a remaining resource block is allocated which is obtained by excluding a part of the resource blocks corresponding to the first channel bandwidth.

### <Notes on operation example 2>

The UE 200 or the gNB 100 of the present embodiment may be configured as the UE 200 or the gNB 100 described in the following items.

(Item 1) A terminal (UE 200) including: a reception unit (control signal and reference signal processing unit 240) that receives a physical downlink control channel (PDCCH) to which one or more resource blocks (PRBs) are allocated; and a control unit (control unit 270) that assumes, when a second channel bandwidth narrower than a first channel bandwidth (CBW) is applied, the physical downlink control channel, to which a remaining resource block is allocated which is obtained by excluding a part of the resource blocks corresponding to the first channel bandwidth.

(Item 2) A terminal (UE 200) including: a reception unit (control signal and reference signal processing unit 240) that receives a physical downlink control channel (PDCCH) to which one or more resource blocks (PRBs) are allocated; and a control unit (control unit 270) that assumes, when a second channel bandwidth narrower than a first channel bandwidth (CBW) is applied, the physical downlink control channel, to which a part of the resource blocks corresponding to the first channel bandwidth is not allocated, and a remaining resource block is allocated.

(Item 3) A terminal (UE 200) including: a reception unit (control signal and reference signal processing unit 240) that receives a physical downlink control channel (PDCCH) to which one or more resource blocks (PRBs) are allocated; and a control unit (control unit 270) that assumes, when a second channel bandwidth narrower than a first channel bandwidth (CBW) is applied, the physical downlink control channel, to which a smaller number of resource blocks are allocated than the resource blocks corresponding to the first channel bandwidth.

(Item 4) A terminal (UE 200) including: a reception unit (control signal and reference signal processing unit 240) that receives a control resource set (CORESET 0) for a physical downlink control channel (PDCCH); and a control unit (control unit 270) that assumes, when a second channel bandwidth narrower than a first channel bandwidth (CBW) is applied, the control resource set, whose position in a frequency direction is different from that of the control resource set, which is arranged based on a sync raster for configuring an arrangement position in the frequency direction of a synchronization signal block (SSB) received using the first channel bandwidth.

(Item 5) A radio base station (gNB 100) including: a transmission unit (transmission unit 120) that transmits a physical downlink control channel (PDCCH) to which one or more resource blocks (PRB) are allocated; and a control unit (control unit 130) that assumes, when a second channel bandwidth narrower than a first channel bandwidth (CBW) is applied, the physical downlink control channel, to which a remaining resource block is allocated which is obtained by excluding a part of the resource blocks corresponding to the first channel bandwidth.

(Item. 6) A radio communication method including: a step of receiving by a terminal (UE 200) a control resource set (CORESET 0) for a physical downlink control channel (PDCCH) to which one or more resource blocks (PRB) are allocated; and a step of assuming by the terminal, when a second channel bandwidth narrower than a first channel bandwidth (CBW) is applied, the physical downlink control channel, to which a remaining resource block is allocated which is obtained by excluding a part of the resource blocks corresponding to the first channel bandwidth.

### <Notes on operation example 3>

The UE 200 or the gNB 100 of the present embodiment may be configured as a UE 200 or a gNB 100 described in the following items.

(Item 1) A terminal (UE 200) including: a reception unit (control signal and reference signal processing unit 240) that receives a tracking reference signal (TRS); and a control unit (control unit 270) that assumes, when a second channel bandwidth (CBW) narrower than a first channel bandwidth is applied, the tracking reference signal, to which a resource block (PRB) of a specific size corresponding to the second channel bandwidth is allocated.

(Item 2) The terminal (UE 200) according to item 1, including: a transmission unit (transmission unit 260) that transmits terminal capability information (Capability bit) indicating that a tracking reference signal (TRS) can be received to which the resource block (PRB) of the specific size is allocated.

(Item 3) A terminal (UE 200) according to item 1 or 2, wherein the control unit (control unit 270) assumes a bandwidth part (BWP) of a specific size, configured to the second channel bandwidth (CBW).

(Item 4) The terminal (UE 200) according to item 3, including: a transmission unit (transmission unit 260) that transmits terminal capability information (Capability bit) indicating that the bandwidth part can be configured.

(Item 5) A radio base station (gNB 100) including: a transmission unit (transmission unit 120) that transmits a tracking reference signal (TRS); and a control unit (control unit 130) that assumes, when a second channel bandwidth (CBW) narrower than a first channel bandwidth is applied, the tracking reference signal, to which a resource block (PRB) of a specific size corresponding to the second channel bandwidth is allocated.

(Item 6) A radio communication method including: a step of receiving by a terminal (UE 200) a tracking reference signal (TRS); and a step of assuming by the terminal, when a second channel bandwidth (CBW) narrower than a first channel bandwidth is applied, the tracking reference signal, to which a resource block (PRB) of a specific size corresponding to the second channel bandwidth is allocated.

As described above, the present disclosure has been described in detail. It is apparent to a person skilled in the art that the present disclosure is not limited to one or more embodiments described in the present disclosure. The present disclosure can be implemented as modifications and variations without departing from the subject matter and the scope of the present disclosure defined by the descriptions of claims. Therefore, the descriptions of the present disclosure are for illustrative purposes only, and are not intended to be any limitations to the present disclosure.

### Reference Signs List

10 Radio communication system
20 NG-RAN
100 gNB
200 UE
210 Radio signal transmission and reception unit
220 Amplifier unit
230 Modulation and demodulation unit
240 Control signal and reference signal processing unit
250 Encoding/decoding unit
260 Data transmission and reception unit
270 Control unit
1001 Processor
1002 Memory
1003 Storage
1004 Communication apparatus
1005 Input apparatus
1006 Output apparatus
1007 Bus
2001 Vehicle
2002 Drive unit
2003 Steering unit
2004 Accelerator pedal
2005 Brake pedal
2006 Shift lever
2007 Left and right front wheels
2008 Left and right rear wheels
2009 Axle
2010 Electronic control unit
2012 Information service unit
2013 Communication module
2021 Current sensor
2022 Rotational speed sensor
2023 Pneumatic sensor
2024 Vehicle speed sensor
2025 Acceleration sensor
2026 Brake pedal sensor
2027 Shift lever sensor
2028 Object detection sensor
2029 Accelerator pedal sensor
2030 Driving support system unit
2031 Microprocessor
2032 Memory (ROM, RAM)
2033 Communication port

## Claims

1. A terminal comprising:
a reception unit that receives a physical broadcast channel to which one or more resource blocks are allocated; and
a control unit that assumes, when a second channel bandwidth narrower than a first channel bandwidth is applied, the physical broadcast channel, to which a remaining resource block is allocated which is obtained by excluding a part of the resource blocks corresponding to the first channel bandwidth.

2. A terminal comprising:
a reception unit that receives a physical broadcast channel to which one or more resource blocks are allocated; and
a control unit that assumes, when a second channel bandwidth narrower than a first channel bandwidth is applied, the physical broadcast channel, where a part of the resource blocks corresponding to the first channel bandwidth is allocated at a position different from a position of a remaining resource block in a time direction.

3. The terminal according to claim 1, wherein
the control unit assumes that a payload smaller than a payload included in the physical broadcast channel, to which the resource blocks corresponding to the first channel bandwidth are allocated, is received in the physical broadcast channel, to which the remaining resource block is allocated.

4. A terminal comprising:
a reception unit that receives a synchronization signal block; and
a control unit that assumes, when a second channel bandwidth narrower than a first channel bandwidth is applied, the synchronization signal block, which is arranged based on a second sync raster whose spacing in a frequency direction is narrower than that of a first sync raster for configuring an arrangement position in the frequency direction of a synchronization signal block received using the first channel bandwidth.

5. A radio base station comprising:
a transmission unit that transmits a physical broadcast channel to which one or more resource blocks are allocated; and
a control unit that assumes, when a second channel bandwidth narrower than a first channel bandwidth is applied, the physical broadcast channel, to which a remaining resource block is allocated which is obtained by excluding a part of the resource blocks corresponding to the first channel bandwidth.

6. A radio communication method comprising:
a step of receiving by a terminal a physical broadcast channel to which one or more resource blocks are allocated; and
a step of assuming by the terminal, when a second channel bandwidth narrower than a first channel bandwidth is applied, the physical broadcast channel, to which a remaining resource block is allocated which is obtained by excluding a part of the resource blocks corresponding to the first channel bandwidth.
